# EUROPÄISCHE PATENTSCHRIFT

(11) **EP 0 815 015 B1**
(45) Veröffentlichungstag und Bekanntmachung des Hinweises auf die Patenterteilung: **18.12.2002**
(21) Anmeldenummer: 96943017.2
(22) Anmeldetag: 19.12.1996
(51) Int. Cl.: B65B 59/00, B65G 15/14

(54) **PAKETAUSLAUFVORRICHTUNG AN FÜLL- UND SCHLIESSMASCHINEN**
PACKAGE DELIVERY DEVICE IN FILLING AND SEALING MACHINES
DISPOSITIF DE DECHARGE DE PAQUETS SUR DES MACHINES DE REMPLISSAGE ET DE FERMETURE

(30) Priorität: 24.01.1996 DE 19602410
(43) Veröffentlichungstag der Anmeldung: 07.01.1998
(73) Patentinhaber: ROBERT BOSCH GMBH, 70442 Stuttgart (DE)
(72) Erfinder: KOMP, Rainer, D-71522 Backnang (DE); GREIF, Andreas, D-71364 Winnenden (DE)
(86) Internationale Anmeldenummer: DE9602455
(87) Internationale Veröffentlichungsnummer: WO97027111

(56) Entgegenhaltungen:
- EP-A- 0 231 960
- US-A- 2 242 177
- US-A- 4 572 760

## Beschreibung

### Stand der Technik

Die Erfindung geht aus von einer Paketauslaufvorrichtung an Füll- und Schließmaschinen nach der Gattung des Anspruchs 1. Solche Paketauslaufvorrichtungen dienen neben der geordneten Ausgabe der gerade gefertigten Pakete auch zum Niederhalten des frisch verklebten Kopfverschlusses von Beutel- oder Faltschachtelpackungen, bis der aufgetragene Kleber im Kopfverschluß sich verfestigt und abgebunden hat, so daß der Kopfverschluß gesichert ist. Um die lichte Höhe zwischen dem Förderband und dem belastenden Obergurt dem Format oder der Füllhöhe der Pakete anzupassen, ist bei bekannten Paketauslaufvorrichtungen das Förderband in der Höhe verstellbar, da die Verschließeinrichtung von Paketiermaschinen auf einem konstanten Niveau arbeitet. Dementsprechend sind die weiterleitenden Fördereinrichtungen für die Pakete der sich ändernden Höhenlage des Förderbandes der Paketauslaufvorrichtung jeweils anzupassen.

### Vorteile der Erfindung

Die erfindungsgemäße Paketauslaufvorrichtung mit den kennzeichnenden Merkmalen des Anspruchs 1 hat den Vorteil, daß sie sich bei einer Einstellung auf wechselnde Pakethöhen trotz eines einfachen und übersichtlichen Aufbaus mit ihrem Einlaufende und ihrem Auslaufende in einfacher Weise an die konstante Zulauf- und Auslaufhöhe der Paketiermaschine und einer nachgeschalteten Fördereinrichtung zum Weiterführen der Pakete anpaßt. Besonders vorteilhaft ist die Ausgestaltung mit den Merkmalen nach Anspruch 2, durch die bei einer Verstellung die Anpassung des Einlaufendes und des Auslaufendes gemeinsam durchgeführt wird. Die Ausgestaltung nach den Merkmalen des Anspruchs 3 ergibt ferner einen besonders einfachen Aufbau der Vorrichtung.

### Zeichnung

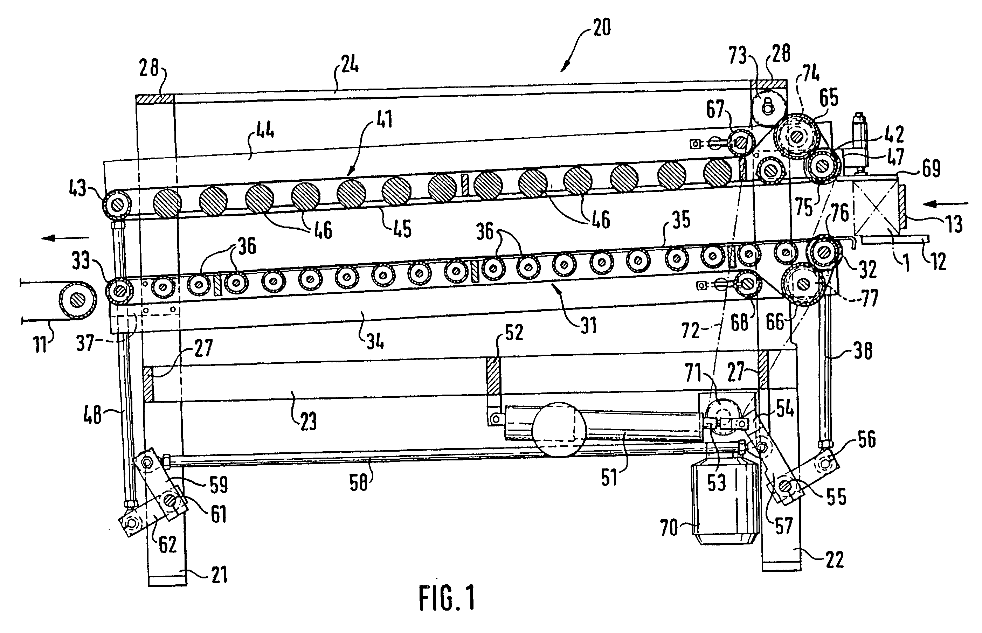

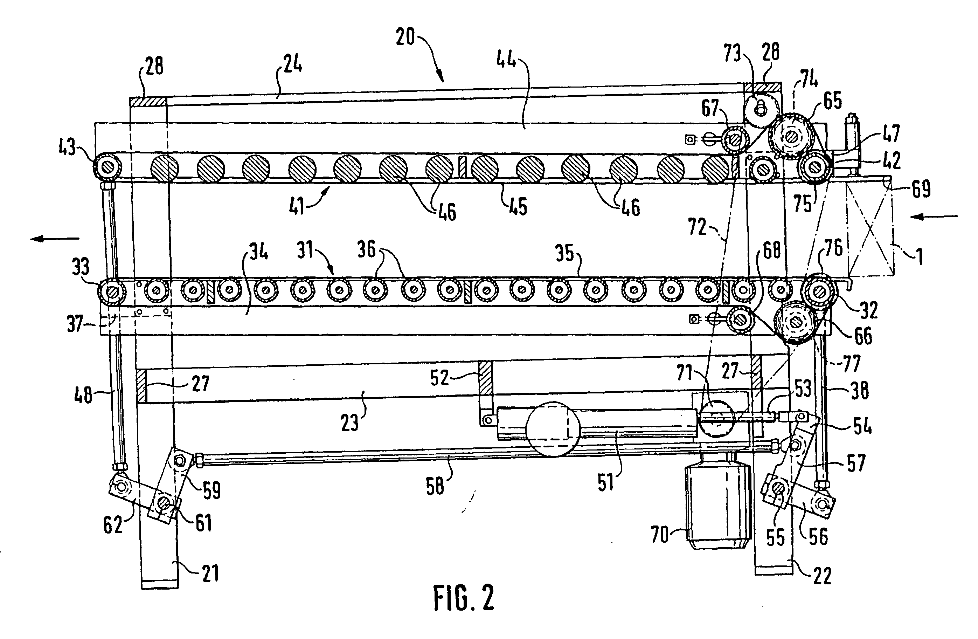

Ein Ausführungsbeispiel der Erfindung ist in der Zeichnung dargestellt und wird im folgenden näher beschrieben. Es zeigen Figur 1 und 2 die Auslaufvorrichtung in einer Minimal- und einer Maximal-Einstellung im Längsschnitt.

### Beschreibung des Ausführungsbeispiels

Die gezeigte Auslaufvorrichtung bildet den Abschluß einer Beutel- oder Faltschachtel-Füll- und Schließmaschine. Sie schließt sich an eine Schließeinrichtung an, welche zum Versiegeln des Kopfverschlusses der Packungen oder Pakete 1 Leim oder Haftkleber aufträgt, und dient dem Halten des Kopfverschlusses während der Abbindezeit des Leimes oder Klebers und zum Übergeben der Pakete 1 an eine Fördereinrichtung 11, beispielsweise einer Sammelpackmaschine. In der Füll- und Schließmaschine werden die Pakete 1 auf einer Bodenschiene 12, die zur Füllhöhenregulierung und Formatumstellung höhenverstellbar ist, stehend von Mitnehmern 13 einer Fördereinrichtung transportiert, und schließlich in die Auslaufvorrichtung eingeschoben.

Die Auslaufvorrichtung hat ein Gestell 20, das zwei gleichartige, parallele Portalstützen mit je einem Paar senkrechter Füße aufweist, welche mit je zwei Längs- 23, 24 und Querbalkenpaaren 27, 28 miteinander fest verbunden sind. Im Gestell 20 sind ein endloses Förderband 31 und im Abstand darüber ein endloser Obergurt 41 angeordnet. Das Förderband 31 läuft über zwei Umlenkrollen 32, 33, die in den Endabschnitten eines langgestreckten Kragrahmens 34 drehbar gelagert sind. Das dem Obergurt 41 naheliegende Trum 35 des Förderbandes 31 wird von mehreren parallelen Stützrollen 36 gestützt, die im Tragrahmen 34 drehbar gelagert sind. Der Tragrahmen 34 ist an seinem auslaufseitigen Ende in zwei an der einen Portalstütze 21 vorstehenden Nase 37 um die Achse der auslaufseitigen Umlenkrolle 33 schwenkbar gelagert, und wird am einlaufseitigen Ende von zwei Stelzen 38 gelenkig gestützt, die Teil einer Verstelleinrichtung sind.

In ähnlicher Weise wie das Förderband 31 läuft der dieses deckende Obergurt 41 über zwei Umlenkrollen 42, 43, die in einem zweiten Tragrahmen 44 drehbar gelagert sind. Das dem Förderband 31 zugewandte Trum 45 des Obergurts 41 wird von mehreren parallelen Gewichtsrollen 46 belastet, die mit viel Spiel im Tragrahmen 44 drehbar gelagert sind. Dieser Tragrahmen 44 ist an seinem einlaufseitigen Ende an zwei an der anderen Portalstütze 22 vorstehenden Nasen 47 um die Achse der einlaufseitigen Umlenkwalze 42 schwenkbar gelagert und wird am auslaufseitigen Ende von zwei Stelzen 48 gelenkig gestützt.

Zum Einstellen des lichten Abstandes des Obergurts 41 vom Förderband 31 zum Anpassen an die Pakethöhe wird zum einen das von dem Stelzen 38 getragene Ende des Rahmens 34 mit dem Förderband 31 angehoben oder abgesenkt, und zum anderen das von den Stelzen 48 getragene Ende des Rahmens 44 mit dem Obergurt 41 entgegengesetzt abgesenkt oder angehoben, so daß sich die einander zugewandten Trume 35 bzw. 45 des Förderbandes 31 bzw. des Obergurtes 41 parallel zueinander hin bzw. voneinander wegbewegen.

Diese Verstellung wird von einem Linearantrieb 51, beispielsweise einem elektromechanischen Hubzylinder oder Hydrozylinder durchgeführt, der in einer Traverse 52 zwischen den Längsbalken 23, 24 des Gestells 20 angelenkt ist. Die Stellstange 53 des Linearantriebs 51 wirkt über einen Hebel 54 auf eine in der Portalstütze 22 gelagerte Welle 55. Auf den Enden dieser Welle 55 sitzen zwei Hebel 56, an denen die den Förderband-Rahmen 34 tragenden Stelzen 38 angelenkt sind, sowie ein dritter Hebel 57, der über eine Kuppel 58 und eine Schwinge 59 auf eine Welle 61 in der anderen Portalstütze 21 wirkt. Auf den Enden dieser Welle 61 sitzt ein Hebelpaar 62, an dem die den Obergurt-Rahmen 44 tragenden Stelzen 48 angelenkt sind. Die Hebellängen dieses vom Linearantrieb 51 verstellbaren Gestänges sind so bemessen, daß beim Verfahren der Stellstange 53 des Linearen Triebs 51 in der einen Richtung das einlaufseitige Ende des Förderband-Rahmens 31 abgesenkt und das auslaufseitige Ende des Obergurt-Rahmens 41 in gleichem Maße angehoben wird und umgekehrt.

Zum Ausgleichen der Längung des Förderbandes 31 und des Obergurts 41 sind in den jeweiligen Rahmen 34 bzw. 44 je eine schleifenbildende Rolle 65 bzw. 66 und eine Spannrolle 67 bzw. 68 angeordnet, die von der Außenseite her auf das Förderband 31 bzw. den Obergurt 41 drücken.

Das Förderband 31 und der Obergurt 41 werden von einem Getriebemotor 70 kontinuierlich angetrieben, so daß sich ihre einander zugekehrten Trume 35 bzw. 45 in gleiche Richtung und mit gleicher Geschwindigkeit vom Einlaß zum Auslaß der Pakete 1 bewegen. Zum Übertragen der Drehbewegung dient eine endlose Kette 72, die in Antriebsrichtung von einem Antriebsritzel 71 des Getriebemotors 70 über ein Längungsausgleichritzel 73, ein mit der Antriebsrolle fest verbundenes zweites Antriebsritzel 74, ein auf der einlaufseitigen Umlenkrollenachse 42 des Obergurts 41 lose sitzende Umlenkrolle 75, ein auf der einlaufseitigen Umlenkrollenachse 32 des Förderbandes 31 lose sitzende Umlenkrolle 76 und ein mit der Antriebsrolle fest verbundenes Antriebsritzel 77 am Rahmen 34 geführt ist.

Das Förderband 31 und der Obergurt 41 werden von dem Getriebemotor 70 mit einer Umlaufgeschwindigkeit angetrieben, die der Fördergeschwindigkeit der Mitnehmer 13 der Fördereinrichtung der Füll- und Schließmaschine so angepaßt ist, daß die Pakete 1 zwischen dem Förderband 31 und dem Obergurt 41 einen geringen Abstand voneinander haben.

Zum Einstellen des lichten Abstands des Obergurts 41 vom Förderband 31 für eine bestimmte Formathöhe wird der Linearantrieb 51 entsprechend angesteuert. Er wird zusätzlich von der Füllhöhenregulierung der Füll- und Schließmaschine laufend so angesteuert, daß die lichte Höhe zwischen Förderband 31 und Obergurt 41 der jeweiligen Höhe der Pakete angepaßt wird.

Die oben beschriebene Auslaufvorrichtung aus einer Füll- und Schließmaschine ist in Figur 1 mit minimaler Höhe und in Figur 2 mit maximaler Höhe gezeigt. Zwischen diesen beiden Stellungen ist die Vorrichtung stufenlos auf andere Stellungen einstellbar. All diesen Stellungen ist gemeinsam, daß die Einlauf-Oberkante, die sich an eine Andrückleiste 69 der Füll- und Schließmaschine anschließt und die Auslaufunterkante immer die selbe konstante Höhe haben.

## Patentansprüche

1. Paketauslaufvorrichtung einer Füll- und Schließmaschine mit einem kontinuierlich angetriebenen Förderband (31), von dem sich ein die Pakete (1) tragendes Trum (35) im wesentlichen in waagrechter Ebene zwischen einer Umlenkrolle (32) am Einlaufende und einer Umlenkrolle (33) am Auslaufende erstreckt, mit einem über dem Förderband (31) angeordneten endlosen Obergurt (41), von dem ein sich zwischen einer Umlenkrolle (42) am Einlaufende und einer Umlenkrolle (43) am Auslaufende erstreckendes gewichtsbelastetes Trum (45) auf dem Kopf der Pakete (1) aufliegend im Abstand der Höhe der Pakete (1) über dem die Pakete tragenden Trum (35) des Förderbandes (31) verläuft, und mit einer Einrichtung zum Einstellen der lichten Höhe des Obergurts (41) zum Förderband (31) entsprechend der Höhe der Pakete (1), **dadurch gekennzeichnet, daß** die Umlenkrolle (32) des Förderbandes (31) am Einlaufende höhenverstellbar, die Umlenkrolle (33) des Förderbandes (31) am Auslaufende ortsfest, die Umlenkrolle (42) des Obergurts (41) am Einlaufende ortsfest und die Umlenkrolle (43) des Obergurts (41) am Auslaufende höhenverstellbar sind.

2. Paketauslaufvorrichtung nach Anspruch 1, **dadurch gekennzeichnet, daß** die Umlenkrollen (32, 33) und Stützrollen (36) des Förderbandes (31) von einem ersten Rahmen (34) getragen werden, der um die Drehaschse der Umlenkrolle (33) des Förderbandes (31) am Auslaufende schwenkbar ist, und daß die Umlenkrollen (42, 43) des Obergurts (41) sowie diesen belastende Gewichtsrollen (46) von einem zweiten Rahmen (44) getragen werden, der um die Drehachse der Umlenkrolle (42) des Obergurts (41) am Einlaufende schwenkbar ist.

3. Paketauslaufvorrichtung nach Anspruch 2, **dadurch gekennzeichnet, daß** das höhenverstellbare Ende des ersten Rahmens (34) mit der Umlenkrolle (32) für das Förderband (31) am Einlaufende und das höhenverstellbare Ende des zweiten Rahmens (44) mit der Umlenkrolle (42) für den Obergurt (41) am Auslaufende über ein Verstellgestänge (53 bis 62) mit einander verbunden sind, das an einem Linearantrieb (51) angebunden ist.

## Claims

1. Package-delivery apparatus of a filling and sealing machine, having a continuously driven conveying belt (31), of which a strand (35) which bears the packages (1) extends essentially in a horizontal plane between a deflecting roller (32) at the inlet end and a deflecting roller (33) at the delivery end, having an endless top belt (41), which is arranged above the conveying belt (31) and of which a weighted strand (45) which extends between a deflecting roller (42) at the inlet end a deflecting roller (43) at the delivery end rests on the top of the packages (1) and is spaced apart above the package-bearing strand (35) of the conveying belt (31) by the height of the packages (1), and having an arrangement for adjusting the clearance between the top belt (41) and the conveying belt (31) in accordance with the height of the packages (1), **characterized in that** the deflecting roller (32) of the conveying belt (31) at the inlet end is height-adjustable, the deflecting roller (33) of the conveying belt (31) at the delivery end is stationary, the deflecting roller (42) of the top belt (41) at the inlet end is stationary and the deflecting roller (43) of the top belt (41) at the delivery end is height-adjustable.

2. Package-delivery apparatus according to Claim 1, **characterized in that** the deflecting rollers (32, 33) and supporting rollers (36) of the conveying belt (31) are borne by a first frame (34), which can be pivoted about the axis of rotation of the deflecting roller (33) of the conveying belt (31) at the delivery end, and **in that** the deflecting rollers (42, 43) of the top belt (41) and the weighting rollers (46), which subject said top belt to loading, are borne by a second frame (44), which can be pivoted about the axis of rotation of the deflecting roller (42) of the top belt (41) at the inlet end.

3. Package-delivery apparatus according to Claim 2, **characterized in that** the height-adjustable end of the first frame (34), with the deflecting roller (32) for the conveying belt (31) at the inlet end, and the height-adjustable end of the second frame (44), with the deflecting roller (42) for the top belt (41) at the delivery end, are connected to one another via an adjustment linkage (53 to 62), which is attached to a linear drive (51).

## Revendications

1. Dispositif de sortie de paquets d'une machine à remplir et à fermer avec une bande transporteuse (31) entraînée en continu dont une face (35) portant les paquets (1) s'étend pratiquement dans un plan horizontal entre une poulie de renvoi (32) à l'extrémité d'entrée et une poulie de renvoi (33) à l'extrémité de sortie, avec une courroie supérieure (41) sans fin, placée au-dessus de la bande transporteuse (31), dont une face (45), qui est chargée en poids et qui s'étend entre une poulie de renvoi (42) à l'extrémité d'entrée et une poulie de renvoi (43) à l'extrémité de sortie, s'appuyant sur le sommet des paquets (1), s'étend à une distance de la hauteur des paquets (1) au-dessus de la face (35), portant les paquets, de la bande transporteuse (31), et avec une installation pour régler la hauteur intérieure de la courroie supérieure (41) par rapport à la bande transporteuse (31) selon la hauteur des paquets (1),
**caractérisé en ce que**
la poulie de renvoi (32) de la bande transporteuse (31) peut être mise au point en hauteur à l'extrémité d'entrée, la poulie de renvoi (33) de la bande transporteuse (31) à l'extrémité de sortie est stationnaire, la poulie de renvoi (42) de la courroie supérieure (41) à l'extrémité d'entrée est stationnaire et la poulie de renvoi (43) de la courroie supérieure (41) à l'extrémité de sortie peut être mise au point en hauteur.

2. Dispositif de sortie de paquets selon la revendication 1,
**caractérisé en ce que**
les poulies de renvoi (32, 33) et les rouleaux d'appui (36) de la bande transporteuse (31) sont supportés par un premier cadre (34) qu'on peut faire pivoter autour de l'axe de rotation de la poulie de renvoi (33) de la bande transporteuse (31) à l'extrémité de sortie, et que les poulies de renvoi (42, 43) de la courroie supérieure (41) ainsi que les rouleaux de poids (46) qui la chargent sont supportés par un deuxième cadre (44) qu'on peut faire pivoter autour de l'axe de rotation de la poulie de renvoi (42) de la courroie supérieure (41) à l'extrémité d'entrée.

3. Dispositif de sortie de paquets selon la revendication 2,
**caractérisé en ce que**
l'extrémité réglable en hauteur du premier cadre (34) avec la poulie de renvoi (32) pour la bande transporteuse (31) à l'extrémité d'entrée et l'extrémité réglable en hauteur du deuxième cadre (44) avec la poulie de renvoi (42) pour la courroie supérieure (41) à l'extrémité de sortie sont liés ensemble par des tiges de mise au point (53 à 62) qui sont rattachées à un entraînement linéaire (51).
